# EUROPEAN PATENT APPLICATION

(11) **EP 4 640 412 A1**
(43) Date of publication of application: **29.10.2025**
(21) Application number: 23905911.6
(22) Date of filing: 19.12.2023
(51) Int. Cl.: B29C 70/52, B29C 70/54, B26D 1/60, B26D 1/547, B26D 7/28, B26D 7/02, B26D 7/00

(54) **PULTRUSION APPARATUS AND PULTRUSION METHOD**

(30) Priority: 21.12.2022 CN 202211647426; 21.12.2022 CN 202211647513
(71) Applicant: Jiangsu Shemar Electric Co., Ltd., Nantong City, Jiangsu 226017 (CN)
(72) Inventor: SUN, Yinjian, Nantong, Jiangsu 226017 (CN); GUO, Qiang, Nantong, Jiangsu 226017 (CN)
(74) Representative: Mewburn Ellis LLP
(86) International application number: PCT/CN2023/139705
(87) International publication number: WO 2024/131748

(57) **Abstract**

A pultrusion apparatus used for manufacturing a pultruded product. The pultrusion apparatus sequentially comprises, in a pultrusion advancing direction, a forming device (120) for curing yarn into a pultruded product, a traction device (130) for providing pultrusion traction, and a cutting device (140) for cutting the pultruded product, wherein the forming device, the traction device and the cutting device are horizontally arranged on a frame in the lengthwise direction of the frame (160); the cutting device comprises a following mechanism (141), which is arranged on the frame and can move in the lengthwise direction of the frame, and a cutting mechanism (142), which is mounted on the following mechanism and is used for cutting the pultruded product; the following mechanism comprises a base (1411) and a clamping mechanism (1412) arranged on the base; and the clamping mechanism is used for holding and clamping the pultruded product, such that the following mechanism synchronously moves with the pultruded product. In the pultrusion apparatus, the cutting device can synchronously move with the pultruded product, such that the cutting device and the pultruded product remain relatively still during cutting, thereby improving the quality of a cut surface and the operation efficiency, and reducing the waste of materials. Further provided is a pultrusion method.

## Description

### TECHNICAL FIELD

The present application relates to the field of pultrusion technologies, and in particular, to a pultrusion apparatus and a pultrusion method.

### BACKGROUND

Pultrusion is a process in which fibers are subjected to the steps of impregnation, extrusion thermoforming, cutting, etc., under traction of an external force to finally obtain a pultruded product with a preset length. A current pultrusion apparatus usually adopts the method of manually measuring the length and performing cutting by holding a cutting machine, but the manual measurement has the problems of poor precision, need for a secondary measurement, low efficiency, and others. In addition, since the pultruded product is in a state of constant movement and manual cutting action is unstable, it cannot be ensured that the cutting machine and the pultruded product are kept relatively static during cutting, resulting in problems such as delamination and burrs on the cut surface, requiring secondary trimming, which is inefficient and wasteful.

### SUMMARY

In view of the defects of the prior art, an object of the present invention is to provide a pultrusion apparatus. This apparatus enables a cutting device to move synchronously along with a pultruded product, so that the cutting device and the pultruded product are kept relatively static during cutting, thereby improving cut surface quality and operation efficiency, reducing material waste, realizing full-automatic production, and reducing labor costs.

In order to achieve the above object, the following technical means are adopted in the present invention: a pultrusion apparatus is configured to manufacture a pultruded product and includes: successively in order in a pultrusion advancing direction, a forming device configured for curing yarns into the pultruded product, a traction device configured for providing a pultrusion traction force, and a cutting device configured for cutting the pultruded product. The forming device, the traction device, and the cutting device are horizontally arranged on a rack in a length direction of the rack. The cutting device includes a following mechanism which is arranged on the rack and movable in the length direction of the rack and a cutting mechanism which is mounted on the following mechanism and configured to cut the pultruded product. The following mechanism includes a base and a clamping mechanism arranged on the base. The clamping mechanism is configured to clamp the pultruded product to cause the following mechanism to move synchronously along with the pultruded product.

Among others, the pultrusion apparatus further includes a storage device. The storage device is located at a next station relative to the cutting device in the pultrusion advancing direction. The storage device includes at least two storage members. Each storage member includes a driving mechanism, a transferring mechanism, and a storage mechanism. The transferring mechanism is located directly above the driving mechanism and includes two transferring members elastically abutting against each other. The two transferring members face each other in a width direction of the rack. The driving mechanism drives the pultruded product to pass through the transferring mechanism. The storage mechanism is fixedly connected to a side of the transferring mechanism in the width direction of the rack.

Among others, upper surfaces of the two transferring members and a storage surface of the storage mechanism are located in a same plane, the plane being inclined downwardly towards the storage mechanism.

Among others, the transferring mechanism further includes two fixing frames facing each other in the width direction of the rack. The transferring member is located between the two fixing frames and connected to the fixing frames through springs.

Among others, the traction device includes two clamping traction mechanisms capable of alternately advancing, each clamping traction mechanism including a sliding holding claw slidably connected to the rack and a movable holding claw movable in a vertical direction. A hydraulic cylinder drives the movable holding claw to move, so as to cause the sliding holding claw and the movable holding claw to cooperate with each other to clamp the pultruded product.

Among others, the following mechanism is provided with two clamping mechanisms. The two clamping mechanisms are arranged on two sides of the cutting mechanism in the length direction of the rack, respectively.

Among others, the cutting device is further provided with a pushing plate. The pushing plate pushes a cut pultruded product to fall into the storage mechanism along with a movement of the following mechanism.

Among others, the pultrusion apparatus further includes a measuring mechanism, the measuring mechanism including a sensor. The sensor detects a pultruded product position signal and transmits the pultruded product position signal to the following mechanism, so as to control the following mechanism to clamp the pultruded product. The following mechanism sends a signal to the cutting mechanism after the clamping is completed, so as to control the cutting mechanism to cut the pultruded product.

Among others, the rack is provided with at least two forming devices, at least two traction devices, at least two cutting devices, and at least two storage devices; and the at least two forming devices are arranged in the width direction of the rack. The at least two traction devices are arranged in the width direction of the rack. The at least two cutting devices are arranged in the width direction of the rack. The at least two storage devices are arranged in the width direction of the rack.

A second object of the present application is to provide a pultrusion method, including: step (1): impregnating a plurality of yarns with resin, then allowing the plurality of yarns to enter a forming device and be cured at a high temperature and formed into a pultruded product, and pulling, by a traction device, the pultruded product to move in a pultrusion advancing direction, such that the pultruded product is continuously formed; step (2): detecting a pultruded product position signal and transmitting the pultruded product position signal to a cutting device, such that the cutting device cuts the pultruded product according to a preset length; and step (3): driving the cutting device to be reset and wait for next cutting.

Among others, the pultrusion apparatus includes a measuring mechanism, and the measuring mechanism includes a sensor. In the step (2), the pultruded product position signal is detected by the sensor. The pultrusion method further includes, before the step (2), step a1: moving the sensor to a position at a distance from the cutting device equal to the preset length.

Among others, in the step (2), the cutting the pultruded product specifically includes: step b1: clamping the pultruded product at the preset length thereof by the cutting device, so as to cause the cutting device to synchronously move along with the pultruded product; and step b2: beginning cutting the pultruded product by the cutting device until the cutting is completed.

Among others, the pultrusion apparatus further includes a storage device, and the pultrusion method further includes, after the step (2), step d1: allowing a cut pultruded product to fall into the storage device.

Among others, the pultrusion apparatus further includes a support mechanism, and the pultrusion method further includes, after the step (2), step e1: after the cutting is completed, continuously moving a following mechanism in the pultrusion advancing direction, so as to drive a clamping mechanism to clamp a cut pultruded product to move; and step e2: after the following mechanism moves in place, allowing the clamping mechanism to release the cut pultruded product, such that the cut pultruded product is located on the support mechanism and waits to be discharged.

Among others, in the step (3), the resetting of the cutting device specifically includes: step f1: restoring a cutting mechanism to an initial state to wait for next cutting; and step f2: returning the following mechanism to an initial position to wait for next following.

The present application has the following beneficial effects: the cutting device of the pultrusion apparatus according to the present application includes the following mechanism movable in the length direction of the rack, the cutting mechanism is mounted on the following mechanism, the following mechanism moves synchronously along with the pultruded product, and therefore, the cutting mechanism can also move synchronously along with the pultruded product, so that the cutting mechanism and the pultruded product are kept relatively static during cutting, thereby improving the cut surface quality and the operation efficiency, and reducing the material waste.

Meanwhile, the pultrusion apparatus according to the present application includes the storage device disposed behind the cutting device in the pultrusion advancing direction. The storage device can store the cut pultruded product, preventing the cutting of a latter section of the pultruded product from being affected if a previous cut section of the pultruded product is not moved away in time. And real-time watching by a specially-assigned person is not required, reducing labor costs.

In addition, in the present application, the rack may be provided with the at least two forming devices, the at least two traction devices, the at least two cutting devices, and the at least two storage devices, and these devices share one rack, so that costs and floor space can be reduced, and production efficiency can be improved.

### BRIEF DESCRIPTION OF THE DRAWINGS

FIG. 1 is a front view of a pultrusion apparatus 100 according to an embodiment of the present invention;
FIG. 2 is a schematic structural view of a cutting device 140 and a storage device 150;
FIG. 3 is a schematic enlarged view of portion A in FIG. 2;
FIG. 4 is a schematic structural view of the cutting device 140 in an embodiment of the present invention;
FIG. 5 is a schematic partial structural view of the pultrusion apparatus 100 according to another embodiment of the present invention;
FIG. 6 is a schematic enlarged view of portion B in FIG. 5;
FIG. 7 is a schematic structural view of a cutting mechanism 142 in an embodiment of the present invention; and
FIG. 8 is a partial top view of a pultrusion apparatus 100 according to another embodiment of the present invention.

### DETAILED DESCRIPTION

As required, detailed embodiments of the present invention are disclosed herein. However, it is to be understood that the disclosed embodiments are merely exemplary examples of the present invention, and may be embodied in various forms. Therefore, specific details disclosed herein are not to be interpreted as limiting, but merely as a basis for the claims and as a representative basis for teaching those skilled in the art to variously apply the present invention in any appropriate manner in practice, including employing various features disclosed herein in conjunction with other features that may not be explicitly disclosed herein.

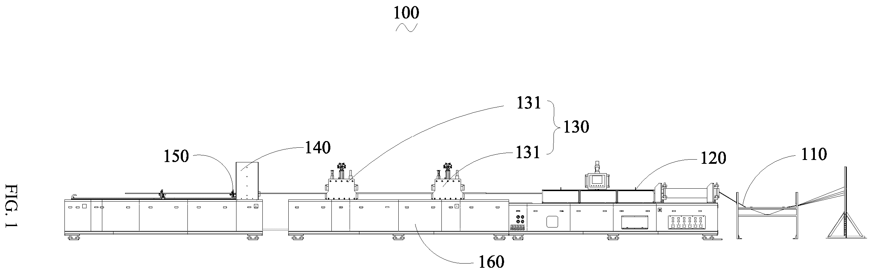

In an embodiment, referring to FIG. 1 to FIG. 6, a pultrusion apparatus 100 is configured to manufacture a pultruded product and sequentially includes a forming device 120 configured for curing yarns into the pultruded product, a traction device 130 configured for providing a pultrusion traction force, and a cutting device 140 configured for cutting the pultruded product along a pultrusion advancing direction; the forming device 120, the traction device 130, and the cutting device 140 are horizontally arranged on a rack 160 along a length direction of the rack 160. When the pultrusion apparatus 100 manufactures the pultruded product, yarns impregnated with resin are generally adopted as a raw material, the yarns are required to be continuously supplied, and a yarn supply device 110 is arranged near the forming device 120. The yarn supply device 110 includes a creel and an impregnation device. A plurality of yarns are placed on the creel. The plurality of yarns are led out by the creel, and then enter the impregnation device to be impregnated with resin, and then enter the forming device 120, for manufacturing the pultruded product.

For convenience of illustration, in a horizontal plane in which the rack 160 is placed, the length direction of the rack 160 is defined as an X axis, and a direction perpendicular to the X axis in the horizontal plane is defined as a Y axis. That is, a width direction of the rack 160 is the Y axis. In addition, the pultruded product in the present application includes both a hollow tubular product and a solid columnar product, i.e., a solid rod. Certainly, the pultruded product may be of a cylinder, a prism, other irregular columnar bodies, etc., and a specific configuration thereof is not limited. In the present application, an axial direction of the pultruded product, the length direction of the rack 160, and the X-axis direction are the same.

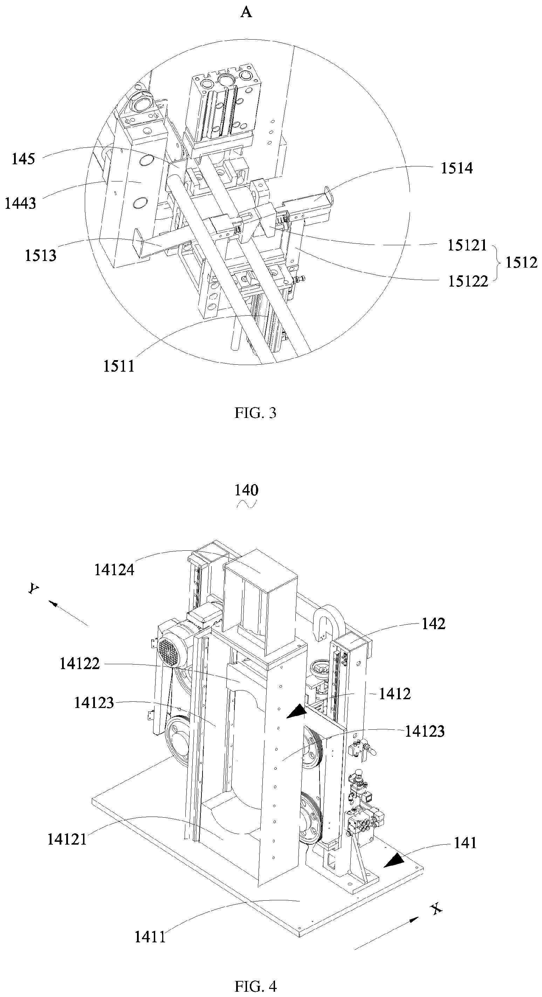

Referring to FIG. 1 and FIG. 4 together, the cutting device 140 includes a following mechanism 141 which is arranged on the rack 160 and movable in the X-axis direction, and a cutting mechanism 142 which is mounted on the following mechanism 141 and configured to cut the pultruded product. The following mechanism 141 includes a base 1411 and a clamping mechanism 1412 arranged on the base 1411. The clamping mechanism 1412 is configured to clamp the pultruded product, allowing the whole following mechanism 141 to move synchronously along with the pultruded product. The cutting mechanism 142 is fixedly connected to the base 1411, so that the cutting mechanism 142 can move synchronously along with the following mechanism 141, and therefore, the cutting mechanism 142 and the pultruded product can be kept relatively static during cutting, thereby improving cut surface quality and operation efficiency, and reducing material waste.

A sliding rail is arranged on the rack 160 in the X-axis direction, and a sliding block is correspondingly arranged on the base 1411, so that the base 1411 can move on the rack 160 in the X-axis direction.

In an embodiment, as shown in FIG. 4, the clamping mechanism 1412 can clamp and release the pultruded product by moving in a vertical direction. The clamping mechanism 1412 includes a lower clamping member 14121, an upper clamping member 14122 arranged above the lower clamping member 14121, two guide plates 14123 arranged vertically, and a clamping hydraulic cylinder 14124 configured for driving the upper clamping member 14122 to move vertically between the two guide plates 14123. The two guide plates 14123 are arranged parallel to the X-axis direction. The upper clamping member 14122 is slidably connected to the two guide plates 14123. A piston rod of the clamping hydraulic cylinder 14124 is fixedly connected to the upper clamping member 14122 to drive the upper clamping member 14122 to move between the two guide plates 14123 and cause the pultruded product to abut against the lower clamping member 14121. The clamping hydraulic cylinder 14124 is provided to stably fix the pultruded product between the lower clamping member 14121 and the upper clamping member 14122, and facilitate clamping and releasing of the pultruded product.

Specifically, the two guide plates 14123 face each other and are spaced apart in the Y-axis direction. The sliding rail is vertically arranged on each of the two guide plates 14123, and two ends of the upper clamping member 14122 are correspondingly provided with the sliding blocks, so that the upper clamping member 14122 is slidably connected to the two guide plates 14123, so as to facilitate the clamping hydraulic cylinder 14124 to drive the upper clamping member 14122 to move in the vertical direction. The lower clamping member 14121 is fixed on the base 1411 and arranged between the two guide plates 14123. The lower clamping member 14121 and the upper clamping member 14122 face each other in the vertical direction. The lower clamping member 14121 and the upper clamping member 14122 are provided with grooves facing each other to accommodate the pultruded product. When the clamping mechanism 1412 operates, the piston rod of the clamping hydraulic cylinder 14124 extends out in the vertical direction to drive the upper clamping member 14122 to move downwardly in the vertical direction between the two guide plates 14123 until the pultruded product abuts against both the lower clamping member 14121 and the upper clamping member 14122, so as to complete a process of clamping the pultruded product. When the piston rod of the clamping hydraulic cylinder 14124 retracts in the vertical direction, the upper clamping member 14122 can be driven to move upwardly in the vertical direction between the two guide plates 14123, thereby completing a process of releasing the pultruded product.

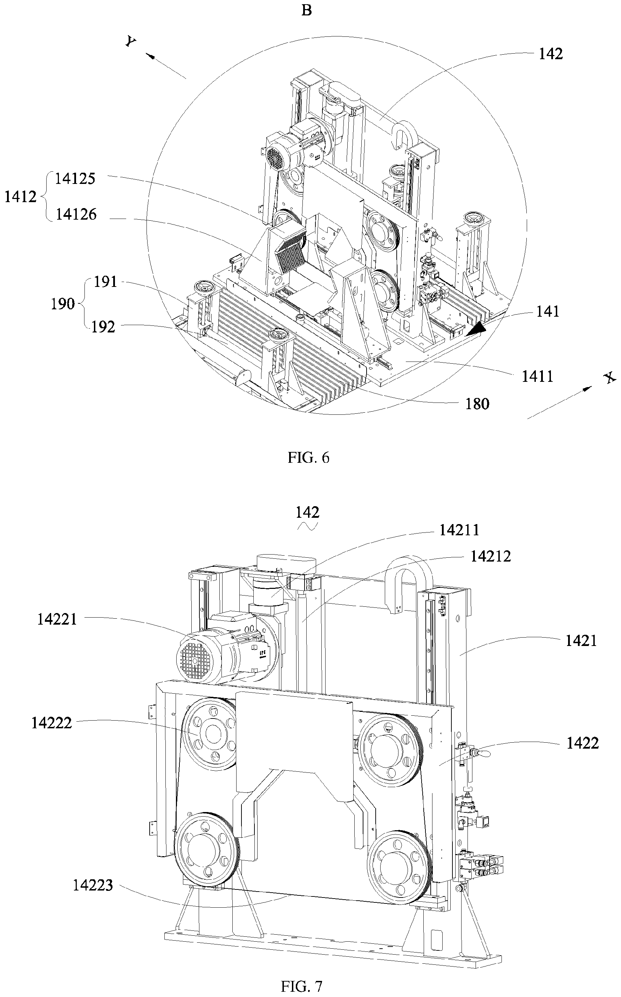

In another embodiment, as shown in FIG. 6, the clamping mechanism 1412 can clamp and release the pultruded product by moving in a horizontal direction. The clamping mechanism 1412 includes two holding claws 14125 and two holding claw support frames 14126. The two holding claw support frames 14126 are arranged on the base 1411 and directly face each other in the Y-axis direction. The two holding claws 14125 are respectively located on side surfaces that face each other, of the two holding claw support frames 14126, so that the two holding claws 14125 also directly face each other in the Y-axis direction. As such, when the two holding claw support frames 14126 move back and forth in the Y axis, the two holding claws 14125 may clamp and release the pultruded product, and forces applied to two sides of the pultruded product during clamping by the clamping mechanism 1412 are the same, thus avoiding deviation of the pultruded product.

The holding claw 14125 is detachably fixed on the holding claw support frame 14126, and can be specifically connected to each other through fasteners or a snap-fit connection. Holding claws of different specifications can be replaced according to pultruded products of different specifications (mainly cross-sectional sizes), thus improving adaptability of the apparatus. The holding claw 14125 is V-shaped and can be adapted to pultruded products with different specifications and sizes in a certain range. When the size of the pultruded product is changed in a small range, the holding claw 14125 can be applicable without replacement, so that working efficiency is improved. Meanwhile, a contact surface of the holding claw 14125 with the pultruded product is additionally provided with a flexible material, and the flexible material can increase the contact area between the holding claw 14125 and the pultruded product through elastic bending, so that a friction force between the holding claw 14125 and the pultruded product is increased, the traction force of the traction device 130 is enough to drive the following mechanism 141 to move. As such, the following mechanism 141 can synchronously move along with the pultruded product without the need for an additional traction force, and deformation damage to the pultruded product caused by stress concentration in the process of clamping the pultruded product by the clamping mechanism 1412 can be avoided. The flexible material may be polyurethane, rubber, or other materials, which is not limited herein.

A sliding rail is arranged on the base 1411 in the Y-axis direction, and a sliding block is correspondingly arranged on the holding claw support frame 14126, so that the holding claw support frame 14126 can move back and forth on the base 1411 in the Y-axis direction. A clamping cylinder is arranged on the base 1411. The clamping cylinder drives the two holding claw support frame 14126 to move towards each other, so that the two holding claws 14125 clamp the pultruded product. The clamping cylinder drives the two holding claw support frame 14126 to move away from each other, so that the two holding claws 14125 release the pultruded product. A gear is arranged on the base 1411 between the two holding claw support frames 14126. Two gear racks are arranged on two sides of the gear for meshing. The two gear racks are arranged in parallel and fixedly connected to the two holding claw support frames 14126 through fasteners respectively. The clamping cylinder drives the gear to rotate to drive the two gear racks to move, so that the two holding claw support frames 14126 are driven to move. As such, the two holding claw support frames 14126 are driven by one clamping cylinder simultaneously, and it is possible to avoid the pultruded product from deviating due to uneven clamping force of the clamping mechanism 1412 caused by asynchronous starting of the two motors in the case of using the two motors. In other embodiments, the two holding claw support frames can be driven by one motor at the same time, or other structures capable of providing linkage operation such as a synchronous belt, a sprocket wheel or a chain can also be adopted to realize synchronous movement of the two holding claw support frames, which is not repeated herein.

In this embodiment, two clamping mechanisms 1412 are arranged on the base 1411. The two clamping mechanisms 1412 are spaced apart in the X-axis direction. The two clamping mechanisms 1412 are respectively located at two sides of the cutting mechanism 142. By providing the two clamping mechanisms 1412 on the two sides of the cutting mechanism 142 respectively to clamp the pultruded product at the same time, it avoids the problems of burrs and delamination on the cut surface caused by the shaking of the pultruded product during cutting. The arrangement of the two clamping mechanisms 1412 increases the contact area between the following mechanism 141 and the pultruded product, thereby increasing the friction force, so that the following mechanism 141 can move along with the pultruded product more stably, and following failure of the following mechanism 141 caused by an insufficient clamping force is avoided. The latter threaded clamping mechanism 1412 in the pultrusion advancing direction can continuously clamp the cut pultruded product after the cutting of the pultruded product is finished, and drive the cut pultruded product to continuously move with continuous movement of the following mechanism 141, which avoids the cutting mechanism 142 from damaging the cut pultruded product when the cut pultruded product is not taken away immediately after the cutting is finished.

In another embodiment, one clamping mechanism 1412 is arranged on the base 1411. The clamping mechanism 1412 is arranged on a side of the cutting mechanism 142, and the pultruded product to be cut sequentially passes through the cutting mechanism 142 and the clamping mechanism 1412, so that the clamping mechanism 1412 can continuously clamp the cut pultruded product to continuously move after the cutting of the pultruded product is finished, so as to avoid the cutting mechanism 142 from damaging the cut pultruded product when the cut pultruded product is not taken away immediately after the cutting is finished.

As shown in FIG. 7, the cutting mechanism 142 includes a moving frame 1421 and a cutting frame 1422. The moving frame 1421 is vertically arranged on the base 1411, the cutting frame 1422 is arranged on the moving frame 1421. The moving frame 1421 drives the cutting frame 1422 to move in the vertical direction. A cutting motor 14221 and at least two guide wheels 14222 are arranged on the cutting frame 1422. A diamond wire 14223 is arranged on the peripheries of the at least two guide wheels 14222 in a tensioned manner. The cutting motor 14221 drives the guide wheels 14222 to rotate to drive the diamond wire 14223 to rotate. The moving frame 1421 is of a frame structure and spans the base 1411. The pultruded product can movably pass through the moving frame 1421. The cutting frame 1422 moves in the vertical direction, so that a cut end surface of the pultruded product is perpendicular to the axial direction of the pultruded product, the end surface is smooth and does not need to be processed again, avoiding waste.

In this embodiment, the cutting frame 1422 is a rectangular plate, and four guide wheels 14222 are arranged on a plate surface of the cutting frame 1422 on the side away from the moving frame 1421, and distributed at four corners of the cutting frame 1422. The straight line where axle centres of the two guide wheels 14222 away from the base 1411 are located is parallel to both the straight line where the axle centres of the two guide wheels 14222 adjacent to the base 1411 are located and the plane where the base 1411 is located, that is, parallel to the horizontal plane, and in this case, a part of the diamond wire 14223 configured to cut the pultruded product is located on the horizontal plane. That is, the line connecting the axes of the four guide wheels 14222 forms a parallelogram or a trapezoid. The cutting frame 1422 is further provided with a cavity for accommodating the pultruded product. That is, when the cutting frame 1422 moves downwardly on the moving frame 1421 for cutting, the cut pultruded product can be accommodated in the cavity without interfering with the cutting operation. The arrangement of the part of the diamond wire 14223 for cutting the pultruded product on the horizontal plane may realize horizontal cutting, which facilitates stable cutting. In other embodiments, the diamond wire may not be arranged on the horizontal plane as long as stable cutting can be realized. The diamond wire 14223 is adopted to replace a conventional cutting blade, resulting in lower noise, less dust, easier installation and replacement, faster cutting speeds, and lower costs. Since diamond has high hardness and high abrasion resistance, the diamond wire 14223 has a longer service life. In addition, damage to the cut surface caused by the diamond wire 14223 is less than that caused by the conventional cutting blade, which is beneficial to reducing material loss.

In other embodiments, only two guide wheels can be arranged to drive the diamond wire to rotate, and in this case, the two guide wheels are distributed on two sides of the cutting frame, and the straight line where the axle centres of the two guide wheels are located is parallel to the horizontal plane. In addition, other forms such as a triangular distribution of three guide wheels can also be arranged. In addition, the cutting may be performed by a saw blade, which is not specifically limited herein.

In an embodiment, at least one guide wheel 14222 is fixed to the cutting frame 1422 by a guide wheel cylinder. The guide wheel cylinder can drive the guide wheel 14222 to move to tension or loosen the diamond wire 14223, which facilitates mounting and replacement of the diamond wire 14223. One of the guide wheels 14222 is slidably arranged on the cutting frame 1422. The guide wheel cylinder is fixedly arranged on the cutting frame 1422, and a piston rod of the guide wheel cylinder is fixedly connected to the guide wheel 14222. The guide wheel cylinder drives the guide wheel 14222 to move on the cutting frame 1422 through the piston rod to tension or loosen the diamond wire 14223. A moving direction of the guide wheel 14222 is not limited as long as the tension or the loosening of the diamond wire 14223 can be controlled. A sliding block is arranged on a side of the guide wheel 14222 connected to the cutting frame 1422, and a sliding rail/sliding groove, or the like, is correspondingly arranged on the cutting frame 1422. The piston rod of the guide wheel cylinder can telescopically move to drive the guide wheel 14222 to slide on the cutting frame 1422, so as to control the tensioning or loosening of the diamond wire 14223. When the tensioning force of the diamond wire 14223 is moderate and can be used for cutting, the piston rod of the guide wheel cylinder is controlled to be kept at a corresponding position and does not telescopically move, and the tensioning state of the diamond wire 14223 can be kept for cutting.

In another embodiment, a moving plate (not shown in the drawings) may be arranged on a side of the cutting frame 1422 where the guide wheel 14222 is not provided, and a through groove is arranged in a position on the cutting frame 1422 opposed to the moving plate, to allow the guide wheel 14222 to be fixedly mounted on the moving plate. A sliding rail is arranged on the cutting frame 1422, and a sliding block is correspondingly arranged on the moving plate, so that the moving plate can move on the cutting frame 1422. The through groove of the cutting frame 1422 needs to not limit movement of the guide wheel 14222 when the moving plate drives the guide wheel 14222 to move. The guide wheel cylinder drives the moving plate to move on the cutting frame 1422, to drive the guide wheel 14222 to move on the cutting frame 1422 to tension or loosen the diamond wire 14223. A moving direction of the moving plate is not limited as long as the tensioning or loosening of the diamond wire 14223 can be controlled. The arrangement of the guide wheel 14222 and the moving plate on two sides of the cutting frame 1422 can prevent the arrangement of the guide wheel cylinder and the telescopic movement of the piston rod from affecting arrangement positions of the other guide wheels 14222, so that the components on the cutting frame 1422 can be reasonably arranged to avoid mutual interference.

A sliding block is arranged on the side of the cutting frame 1422 that is away from the guide wheel 14222, and a corresponding sliding rail is arranged on the moving frame 1421 in the vertical direction, so that the cutting frame 1422 can move on the moving frame 1421 in the vertical direction. The moving frame 1421 is provided with a moving motor 14211 and a lead screw 14212 that is arranged in the vertical direction. The lead screw 14212 is fixedly connected to the cutting frame 1422 through a lead screw nut (not shown in the drawings). The moving motor 14211 drives the lead screw 14212 to rotate to drive the lead screw nut to move vertically on the lead screw 14212, so that the cutting frame 1422 can move vertically on the moving frame 1421.

In this embodiment, both the cutting motor 14221 and the moving motor 14211 are servo motors, the servo motors can precisely control the rotation speed of the guide wheel 14222 and the vertical moving speed of the cutting frame 1422, to meet the linear speed and feed rate requirements for cutting. In other embodiments, types of the cutting motor and the moving motor are not limited as long as power required for cutting can be met.

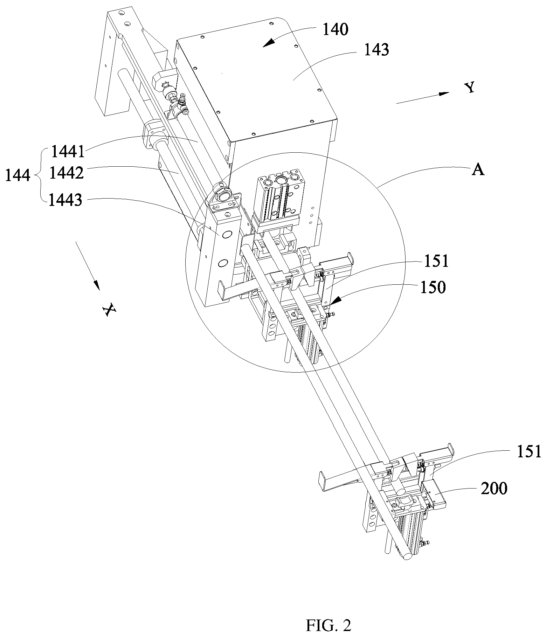

As shown in FIG. 2, the cutting device 140 further includes a dust cover 143. The dust cover 143 encloses the following mechanism 141 and the cutting mechanism 142. The dust cover 143 is a hollow cuboid and is provided with a through hole for the pultruded product to pass through. An outer surface of the dust cover 143 is provided with a plate which can be opened and closed. The diamond wire 14223 can be replaced, or the cutting mechanism 142 or the following mechanism 141 can be repaired after the plate is opened. When the cutting device 140 operates, closing the plate can prevent dust generated by cutting from scattering, and improve the production environment. The base 1411 is provided with a through hole for the dust to fall off. A dust collecting pipe is fixedly connected to the through hole of the base 1411. When the base 1411 moves on the rack 160 in the X-axis direction, the dust collecting pipe also moves therewith. The arrangement of the dust collecting pipe can avoid the accumulation of the dust generated by cutting from affecting the use of the cutting mechanism 142 and the following mechanism 141, and can also avoid the service lives of the cutting mechanism 142 and the following mechanism 141 from being reduced.

As shown in FIG. 2, FIG. 4, and FIG. 7 together, the cutting device 140 further includes a reset driving portion 144. The reset driving portion 144 includes a reset cylinder 1441, a reset lead screw 1442, and two support posts 1443. The two support posts 1443 are parallel to each other and vertically arranged. The reset cylinder 1441 and the reset lead screw 1442 are arranged between the two support posts 1443 in the X-axis direction. A lead screw nut on the reset lead screw 1442 is fixedly connected to the base 1411. The reset cylinder 1441 can drive the base 1411 to move on the rack 160 in the X-axis direction. When the pultruded product is cut, the following mechanism 141 moves along with the pultruded product, and after the cutting is finished, the following mechanism 141 needs to return to its initial position for the next cutting. The arrangement of the reset driving portion 144 can cause the following mechanism 141 to return to the initial position, so that the following mechanism 141 can reciprocate in a cutting stroke range to realize continuous cutting of the pultruded product. In addition, the reset driving portion 144 can also drive the following mechanism 141 to move continuously in the pultrusion advancing direction after a previous section of the pultruded product is cut. Since a latter section of the pultruded product that has not reached a cutting length is still in a uniform motion state during production, in order to avoid material waste and consumption of the service life of the diamond wire 14223 caused by the fact that the latter section of the pultruded product that has not reached the cutting length is cut again in the process that the cutting frame 1422 returns to an initial position, it is required to increase a distance between the diamond wire 14223 and the latter section of the pultruded product that has not reached the cutting length after the previous section of the pultruded product is cut, to provide a space for the cutting frame 1422 to return to the initial position. Therefore, the following mechanism 141 needs to continuously move in the pultrusion advancing direction after the cutting is finished, so that the diamond wire 14223 has sufficient time to return to its initial position. The clamping mechanism 1412 adjacent to the traction device 130 needs to release the pultruded product, so that the latter section of the pultruded product which has not reached the cutting length does not continue to move along with the following mechanism 141. In this case, since the previous cut section of the pultruded product is not subjected to the traction force, the clamping mechanism 1412 away from the traction device 130 needs to clamp the previous cut section of the pultruded product and therefore cannot drive the following mechanism 141 to move continuously in the pultrusion advancing direction, and therefore, the reset driving portion 144 needs to be arranged to drive the following mechanism 141 to move continuously in the pultrusion advancing direction of the pultruded product.

In an embodiment, as shown in FIG. 1 to FIG. 3 together, when the specification of the pultruded product is small, in order to store the cut pultruded product in time, the pultrusion apparatus 100 further includes a storage device 150. The storage device 150 is located at a next station relative to the cutting device 140 in the pultrusion advancing direction. The storage device 150 includes two storage members 151. The two storage members 151 are spaced apart by a certain distance in the length direction of the rack 160. The two storage members 151 are parallel to each other. In other embodiments, the storage device may alternatively include three or more storage members as long as stable material storage can be realized, which is not specifically limited herein.

The storage member 151 includes a driving mechanism 1511, a transferring mechanism 1512, and a storage mechanism 1513. The transferring mechanism 1512 is located directly above the driving mechanism 1511 and includes two transferring members 15121 elastically abutting against each other. The two transferring members 15121 face each other in the width direction of the rack 160. The driving mechanism 1511 drives the pultruded product to pass through the transferring mechanism 1512. The storage mechanism 1513 is fixedly connected to one side of the transferring mechanism 1512 in the width direction of the rack 160. The transferring member 15121 is in a wedge-shaped configuration. A V-shaped groove is formed between opposite wedge-shaped surfaces of the two transferring members 15121. The V-shaped groove is located directly above the pultruded product to allow the easy passage of the pultruded product. The storage device 150 can store the cut pultruded product, preventing the cutting of a latter section of the pultruded product from being affected if a previous cut section of the pultruded product is not moved away in time, and real-time watching by a specially-assigned person is not required, reducing labor costs.

The transferring mechanism 1512 further includes two fixing frames 15122 that face each other in the Y-axis direction. The two fixing frames 15122 are respectively vertically arranged on two sides of the transferring mechanism 1512, and are parallel to each other. The two transferring members 15121 are located between the two fixing frames 15122 and respectively connected to the two fixing frames 15122 through springs, so that the two transferring members 15121 elastically abut against each other. The storage mechanism 1513 is arranged on one of the fixing frames 15122. The storage mechanism 1513 includes a material storage plate and a limiting plate. The material storage plate extends outwardly in a direction away from the transferring mechanism 1512 in the Y-axis direction. A storage surface of the material storage plate and upper surfaces of the two transferring members 15121 are located in the same plane, and the plane is inclined downwardly towards the storage mechanism 1513, so that the pultruded product can be conveniently moved into the storage mechanism 1513. The limiting plate is arranged at an end of the material storage plate away from the transferring member 15121 in the vertical direction, to limit the movement of the pultruded product stored in the storage mechanism 1513, so as to prevent the pultruded product from falling off from the storage mechanism 1513.

The driving mechanism 1511 includes a cylinder and a sliding block fixedly connected to a piston rod of the cylinder. A groove is provided on an upper surface of the sliding block to accommodate the pultruded product, so that the sliding block can stably support the pultruded product. The driving mechanism 1511 is located directly below the two transferring members 15121, which facilitates the driving mechanism 1511 to drive the cut pultruded product to pass through the transferring mechanism 1512 in the vertical direction. When the driving mechanism 1511 operates, the driving mechanism 1511 drives the cut pultruded product to move upwardly in the vertical direction, and since the two transferring members 15121 elastically abut against each other, when the two transferring members 15121 are subjected to a driving force from the driving mechanism 1511, a distance between the two transferring members 15121 is gradually increased until the pultruded product can pass through. After the passage of the pultruded product, the two transferring members 15121 are not subjected to the driving force and are restored to the elastic abutting state. In this case, the upper surfaces of the two transferring members 15121 and the storage surface of the storage mechanism 1513 are restored to be located in the same plane, and the plane is inclined downwardly towards the storage mechanism 1513, so that the pultruded product that has passed through the transferring mechanism 1512 moves towards the storage mechanism 1513 along the plane.

The storage member 151 further includes an auxiliary storage mechanism 1514. The auxiliary storage mechanism 1514 is arranged on the other fixing frame 15122 and faces the storage mechanism 1513. That is, the auxiliary storage mechanism 1514 is fixedly connected to another side of the transferring mechanism 1512 in the Y-axis direction, so as to prevent the pultruded product from falling off from a portion that is located in a direction opposite to the storage mechanism 1513.

Referring to FIG. 2 and FIG. 3 together, the cutting device 140 is further provided with a pushing plate 145. The pushing plate 145 pushes the cut pultruded product to fall into the storage mechanism 1513 with movement of the following mechanism 141. The pushing plate 145 is in the shape of " 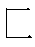 ", with one of two parallel sides connected to the dust cover 143, and the other of two parallel sides configured to abut against the cut surface of the cut pultruded product. The pushing plate 145 and the storage mechanism 1513 are arranged on the same side of the transferring mechanism 1512. After the cutting is finished, the cutting mechanism 142 cannot move to the support post 1443 near the storage device 150 due to a limitation of a cylinder body of the reset cylinder 1441, and therefore, the cut surface of the previous cut section of the pultruded product is located between the support post 1443 close to the storage device 150 and the cutting mechanism 142. In this case, due to the limitation of the support post 1443, the previous cut section of the pultruded product cannot fall into the storage mechanism 1513 completely, and therefore, the pushing plate 145 is arranged to solve the problem. After the cutting of the previous section of the pultruded product is finished, the reset driving portion 144 drives the cutting device 140 to return to the initial position. After the cutting device 140 returns to the initial position, the cut pultruded product exits from the interior of the cutting device 140, the driving mechanism 1511 of the storage member 151 drives the previous section of the pultruded product to pass through the transferring mechanism 1512 in the vertical direction, the previous section of the pultruded product moves along the upper surfaces of the two transferring members 15121 and the storage surface of the storage mechanism 1513 towards the storage mechanism 1513. Due to the limitation of the support post 1443, the previous section of the pultruded product cannot fall completely into the storage mechanism 1513, and as the cutting device 140 continues to cut the latter section of the pultruded product, the following mechanism 141 continues to drive the cutting device 140 to move in the X-axis direction towards the storage device 150, and the pushing plate 145 gradually approaches and abuts against the cut surface of the previous section of the pultruded product during the movement of the cutting device 140 until the previous section of the pultruded product is not limited by the support post 1443 and completely falls into the storage mechanism 1513.

In other embodiments, the pushing plate may not be provided, and the cylinder body of the reset cylinder is fixed on the support post away from the storage device. The cutting mechanism can move to the support post near one side of the storage device, so that the previous section of the pultruded product is not limited by the support post after being cut and completely falls into the storage mechanism.

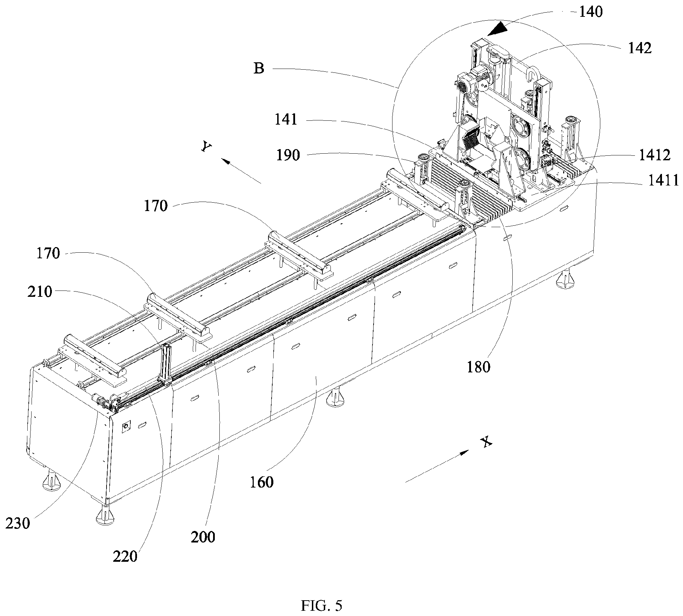

In another embodiment, as shown in FIG. 5 and FIG. 6 together, when the required small-specification pultruded product has a long preset length or the specification of the required pultruded product is large, it is difficult for the storage device 150 to store the pultruded product. In order to stably support the cut pultruded product, the pultrusion apparatus 100 further includes a plurality of support mechanisms 170 that are arranged on the rack 160 and spaced apart in the length direction of the rack 160. In the pultrusion advancing direction, the plurality of support mechanisms 170 are located at the next station relative to the cutting device 140, the support mechanisms 170 are horizontally provided with rollers to support the pultruded product, the rollers are not prone to damage the pultruded product. An axial direction of the rollers is parallel to the Y axis.

Further, two rollers (not shown in the drawing) are further arranged on the support mechanism 170 in the vertical direction, and respectively located at two ends of the roller horizontally arranged, so that the pultruded product located on the support mechanism 170 can be limited, so as to prevent the cut pultruded product from falling off from the support mechanism 170. By using rollers for both limiting and supporting, when the pultruded product moves in the pultrusion advancing direction, interactions between the pultruded product and the rollers are all rolling friction, and the pultruded product is not prone to be damaged.

Further, the cutting device 140 further includes an accordion cover 180. Two ends of the accordion cover 180 are respectively connected to the following mechanism 141 and the support mechanism 170, so that the dust generated by cutting the pultruded product can be prevented from falling into the rack 160, to avoid affecting other components such as the motor, and the service life of the pultrusion apparatus 100 can be prolonged. The accordion cover 180 is designed with pleats and can be retracted and stretched. The accordion cover 180 is not damaged when the following mechanism 141 reciprocates, and the accordion cover 180 can effectively block the dust wherever the following mechanism 141 is located.

Further, an adjustable support mechanism 190 is further arranged on the rack 160. The adjustable support mechanism 190 is arranged adjacent to the following mechanism 141. The adjustable support mechanism 190 can adjust a support position of the pultruded product in the vertical direction. Unlike the support mechanism 170, the adjustable support mechanism 190 can adjust the support position of the pultruded product according to the specification size of the pultruded product, so as to avoid the cut surface from tilting due to sagging of the pultruded product caused by gravity. The adjustable support mechanism 190 includes two support frames 191 and a roller 192. The two support frames 191 are arranged on the rack 160 and directly face each other in the Y-axis direction. A lead screw and a hand wheel are arranged on each support frame 191. The hand wheels control the lead screws to rotate to drive lead screw nuts to move up and down in the vertical direction. Two ends of the roller 192 are fixedly connected to the lead screw nuts on the two support frames 191 respectively. The roller 192 can be driven to move up and down through movement of the lead screw nuts. In other embodiments, the hand wheel can be replaced by a motor to realize automation of the whole apparatus, and synchronous control of the two support frames can be ensured by using the motor, so that the roller is positioned horizontally, adjustment precision is higher, which is not limited thereto. In this embodiment, two adjustable support mechanisms 190 are provided and located on two sides of the following mechanism 141 in the X axis respectively, and thus the pultruded product can be supported stably. In other embodiments, only the support mechanism or only one adjustable support mechanism may be provided, which is not limited herein. If only the support mechanism is provided, two ends of the accordion cover are respectively connected to the following mechanism and the support mechanism. If the adjustable support mechanism is provided, the two ends of the accordion cover are respectively connected to the following mechanism and the adjustable support mechanism.

In order to avoid the cut surface of the pultruded product from tilting due to the sagging of the pultruded product caused by gravity, the pultruded product needs to be supported horizontally near its cut surface, and therefore, the adjustable support mechanism 190 supports a part of the pultruded product near the cut surface, and the precision requirement thereof is high. The support mechanism 170 mainly supports a part of the pultruded product away from the cut surface, and the precision requirement thereof is not high as long as the support can be realized. The combination of the adjustable support mechanism 190 and the support mechanism 170 can save costs while ensuring precision.

As shown in FIG. 2 and FIG. 5, the pultrusion apparatus 100 further includes a measuring mechanism 200. The measuring mechanism 200 includes a sensor configured for detecting a pultruded product position signal and transmitting the pultruded product position signal to the following mechanism 141, so that the following mechanism 141 is controlled to clamp the pultruded product. The following mechanism 141 sends a signal to the cutting mechanism 142 after the clamping is completed, so that the cutting mechanism 142 is controlled to cut the pultruded product. The arrangement of the measuring mechanism 200 enables the pultrusion apparatus 100 to automatically measure the length of the pultruded product and transmit the signal to control cutting, so that the efficiency is high, errors in length precision of the cut product are effectively reduced, and quality of the pultruded product is good.

When the pultrusion apparatus 100 includes the storage device 150, as shown in FIG. 2, the sensor is arranged on the storage member 151 away from the cutting device 140. The sensor is fixedly connected to the fixing frame 15122 and located on the same horizontal plane as the pultruded product to be cut. A motor (not shown in the drawing) is further arranged on the storage member 151 away from the cutting device 140. The motor can drive the storage member 151 away from the cutting device 140 to move in the X-axis direction, and the storage member 151 can be moved to a certain position as required to cause a distance between the sensor and the diamond wire 14223 to be equal to the preset length of the required pultruded product, so that the pultrusion apparatus 100 can manufacture pultruded products with different lengths, and has a wide application range.

When the pultrusion apparatus 100 includes the plurality of support mechanisms 170, as shown in FIG. 5, the measuring mechanism 200 includes a bracket 210, a sensor (not shown in the drawing) arranged on the bracket 210, a synchronous belt 220, a synchronous wheel, and a measuring motor 230. The synchronous belt 220 is arranged on a side of the rack 160 in the X-axis direction, the bracket 210 is located on the synchronous belt 220, and the measuring motor 230 drives the synchronous wheel to rotate to drive the synchronous belt 220 to move. The bracket 210 can be moved to a certain position as required to cause a distance between the bracket 210 and the diamond wire 14223 to be equal to the preset length of the required pultruded product.

After receiving the pultruded product position signal, the sensor sends a signal to the following mechanism 141 to cause the clamping mechanism 1412 to clamp the pultruded product, so that the whole following mechanism 141 moves in the X-axis direction along with the pultruded product, and in this case, the piston rod of the reset cylinder 1441 of the reset driving portion 144 extends outwardly with the movement of the base 1411. The following mechanism 141 sends a signal to the cutting mechanism 142 while the piston rod of the reset cylinder 1441 extends out, and the cutting motor 14221 receives the signal to drive the guide wheel 14222 to rotate, to drive the diamond wire 14223 to move. The moving motor 14211 receives the signal synchronously to drive the lead screw 14212 to rotate, and the lead screw nut drives the cutting frame 1422 to move towards the pultruded product in the vertical direction, so as to complete the cutting of the pultruded product.

As shown in FIG. 1, the traction device 130 includes two clamping traction mechanisms 131 that can advance alternately, so that continuous pultrusion within a certain distance can be realized. The clamping traction mechanism 131 includes a sliding holding claw slidably connected to the rack 160 and a movable holding claw that is movable in the vertical direction. The two holding claws face each other. The movable holding claw that is movable in the vertical direction is driven by a hydraulic cylinder to move downwardly to cause the movable holding claw and the sliding holding claw to cooperate with each other to clamp the pultruded product, and the specific configuration is the same as that of the clamping mechanism 1412 with an upper and lower clamping mode, which will not be repeated herein. The sliding holding claw may slide on the rack 160, so that the clamping traction mechanism 131 may slide on the rack 160. The clamping traction mechanism 131 further includes a driving portion. The driving portion drives the clamping traction mechanism 131 to move in the X-axis direction, so that the pultruded product clamped by the clamping traction mechanism 131 is driven to synchronously move along with the clamping traction mechanism 131. During operation, one of the clamping traction mechanisms 131 clamps and pulls the pultruded product to move towards the cutting device 140 in the X-axis direction, the other of the clamping traction mechanisms 131 stays at the initial position without movement and does not clamp the pultruded product. When the one of the clamping traction mechanisms 131 is about to move to a maximum movable stroke, the other of the clamping traction mechanisms 131 starts to move towards the cutting device 140 in the X-axis direction. When moving speeds of the two clamping traction mechanisms 131 are synchronized, the other of the clamping traction mechanisms 131 clamps the pultruded product to move towards the cutting device 140 in the X-axis direction, and in this case, the two clamping traction mechanisms 131 simultaneously clamp and pull the pultruded product, and traction speeds of the two clamping traction mechanisms 131 are kept consistent to ensure stable traction. When the one of the clamping traction mechanisms 131 has moved to its maximum movable stroke, the clamping is released, the driving is stopped, and in this case, the pultruded product is clamped and pulled to move by the other of the clamping traction mechanisms 131 alone. The one of the clamping traction mechanisms 131 that has reached the maximum stroke returns to the initial position under the action of the driving portion, and waits until the other of the clamping traction mechanisms 131 is about to move to the maximum movable stroke thereof before starting to work, so as to realize continuous pultrusion within the limited distance. The initial position of the clamping traction mechanism 131 refers to a position thereof farthest from the cutting device 140 in a movable range.

Two sides of the clamping traction mechanism 131 in the X-axis direction are connected to the rack 160 through the accordion covers, and the configuration and the function of the accordion cover are as described above, which will not be repeated herein.

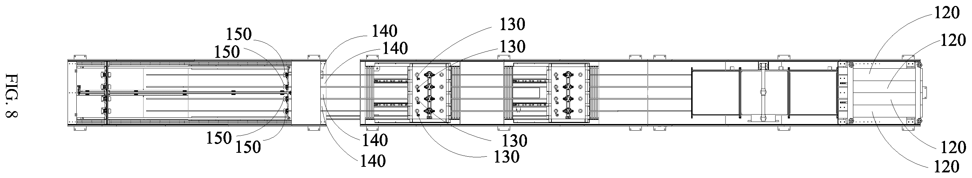

Further, when the pultruded product with a small cross-sectional area is produced, in order to improve the production efficiency, as shown in FIG. 8, four forming devices 120, four traction devices 130, four cutting devices 140, and four storage devices 150 are arranged on the rack. The four forming devices 120 are arranged in parallel in the width direction of the rack. The four traction devices 130 are arranged in parallel in the width direction of the rack. The four cutting devices 140 are arranged in parallel in the width direction of the rack. The four storage devices 150 are arranged in parallel in the width direction of the rack. The four forming devices 120, the four traction devices 130, the four cutting devices 140, and the four storage devices 150 share one rack and form four production lines, each production line includes one forming device 120, one traction device 130, one cutting device 140, and one storage device 150 sequentially arranged in the length direction of the rack. The yarn supply device can supply four groups of yarns simultaneously for production. The four production lines are closely arranged in parallel, thus saving costs and floor space and improving the production efficiency. In other embodiments, the number of the forming device, the traction device, the cutting device, and the storage device are not limited to four, maybe two or three, but need to be kept consistent, and the forming device, the traction device, the cutting device, and the storage device are mated in a one-to-one mode.

In another embodiment, referring to FIG. 1 to FIG. 8 together, a pultrusion method is provided, which is performed to manufacture a pultruded product by using a pultrusion apparatus 100, the pultrusion method including steps (1) to (3).

At Step (1): a plurality of yarns are impregnated with resin, then the plurality of yarns are allowed to enter a forming device 120, and are cured at a high temperature, and are formed into the pultruded product. The pultruded product is pulled by a traction device 130 to move in a pultrusion advancing direction, such that the pultruded product is continuously formed.

In this step, the traction device 130 pulls the pultruded product in an alternating clamping mode to move in the pultrusion advancing direction. The traction device 130 includes two clamping traction mechanisms 131 capable of alternately advancing. The two clamping traction mechanisms 131 alternately clamp and pull the pultruded product to move in the pultrusion advancing direction, so that continuous pultrusion within a limited distance is realized, the yarns continuously enter the forming device 120, the cured pultruded product is continuously pulled out of the forming device 120 and advances forwards, and uninterrupted production is realized.

At Step (2): a pultruded product position signal is detected and transmitted to a cutting device 140, so that the cutting device 140 cuts the pultruded product according to a preset length.

In this step, the pultruded product position signal is detected by a sensor. Further, the method further includes, before the step (2), step a1: moving the sensor to a position at a distance from the cutting device 140 equal to the preset length. When the sensor is arranged on a storage member 151 of a storage device 150, a driving motor drives the storage member 151 to move to cause a distance between the sensor and a diamond wire 14223 to be equal to the preset length of the required pultruded product. When the sensor is arranged on a bracket 210 of a measuring mechanism 200, a measuring motor 230 drives a synchronous wheel to rotate to drive the synchronous belt 220 and the bracket 210 thereon to move, so as to cause the distance between the sensor and the diamond wire 14223 to be equal to the preset length of the required pultruded product.

In the step (2), the step of cutting pultruded product specifically includes step b1 and step b2.

At Step b1: the pultruded product is clamped at the preset length thereof by the cutting device 140, and the cutting device 140 synchronously moves along with the pultruded product.

In this step, when the distance between the sensor and the cutting device 140 is equal to the preset length, the sensor transmits the position signal to the following mechanism 141 to cause the clamping mechanism 1412 to clamp the pultruded product, so that the following mechanism 141 moves synchronously along with the pultruded product, and in turn, a cutting mechanism 142 and the pultruded product are kept relatively static during cutting, thereby improving cut surface quality and operation efficiency, and reducing material waste.

At Step b2: the pultruded product is begun to be cut by the cutting device 140 until the cutting is completed.

In this step, after the clamping of the pultruded product is completed, the cutting mechanism 142 receives the signal sent by the following mechanism 141, a cutting frame 1422 is driven by a moving motor 14211 to move towards the pultruded product in a vertical direction, and a cutting motor 14221 synchronously drives the guide wheels 14222 to rotate, so as to drive the diamond wire 14223 to rotate to cut the pultruded product.

Further, the method further includes, between the step b1 and the step b2, step c1: adjusting a tensioning force of the diamond wire 14223 to be moderate. At least one guide wheel 14222 is fixed to the cutting frame 1422 by a guide wheel cylinder. The guide wheel 14222 is driven by the guide wheel cylinder to move to cause the tensioning force of the diamond wire 14223 to be moderate, so that the diamond wire 14223 is kept in a proper tensioning state for cutting. A piston rod of the guide wheel cylinder can telescopically move to drive the guide wheel 14222 to slide on the cutting frame 1422, so as to control tensioning or loosening of the diamond wire 14223. When the tensioning force of the diamond wire 14223 is moderate and can be used for cutting, the piston rod of the guide wheel cylinder is controlled to be kept at a corresponding position and not to telescopically move, and the tensioning state of the diamond wire 14223 can be kept for cutting.

In an embodiment, when the pultrusion apparatus 100 includes the storage device 150, the method further includes, after the step (2), step d1.

At Step d1: the cut pultruded product is allowed to fall into the storage device 150.

In this step, a driving mechanism 1511 drives the cut pultruded product to move upwardly in the vertical direction until the cut pultruded product passes through two transferring members 15121, and then, the cut pultruded product moves along a plane towards a storage mechanism 1513. The plane is inclined downwardly towards the storage mechanism 1513, which can facilitate the subsequent pultruded product to smoothly enter the storage device 150.

In another embodiment, when the pultrusion apparatus 100 includes a support mechanism 170, step e1 and step e2 are also included after the step (2).

At Step e1: after the cutting is completed, the following mechanism 141 continuously moves in the pultrusion advancing direction, so as to drive the clamping mechanism 1412 to clamp the cut pultruded product to move.

In this step, after the pultruded product is cut, the cutting motor 14221 sends a signal to the clamping mechanism 1412 that is away from the measuring mechanism 200, the clamping mechanism 1412 releases a latter section of the pultruded product that has not reached a cutting length, the clamping mechanism 1412 near the measuring mechanism 200 still clamps the previous cut section of the pultruded product. A reset driving portion 144 drives the following mechanism 141 to drive the previous cut section of the pultruded product to move in the pultrusion advancing direction until a maximum stroke of the reset cylinder 1441 is completed. As such, a distance between the diamond wire 14223 and the latter section of the pultruded product that has not reached the cutting length is increased, thereby providing a condition for causing no damage to the latter section of the pultruded product that is still in production, continuously moves and has not reached the cutting length when the cutting frame 1422 subsequently moves back to an initial position in a vertical direction of a moving frame 1421.

At Step e2: after the following mechanism 141 moves in place, the clamping mechanism 1412 releases the cut pultruded product, so that the cut pultruded product is located on the support mechanism 170 and waits to be discharged.

In this step, after the reset cylinder 1441 finishes the maximum stroke, a solenoid valve of the reset cylinder 1441 sends a signal to the clamping mechanism 1412 near the measuring mechanism 200 to release the pultruded product, and the previous cut section of the pultruded product is supported by an adjustable support mechanism 190 and the support mechanism 170, and waits to be discharged. In other embodiments, the previous cut section of the pultruded product may be supported only by the support mechanism and waiting to be discharged.

At Step (3): the cutting device 140 is driven to be reset, waiting for next cutting.

In this step, the resetting process of the cutting device 140 specifically includes step f1 and step f2.

At Step f1: the cutting mechanism 142 is restored to an initial state, waiting for next cutting.

After the clamping mechanism 1412 near the measuring mechanism 200 releases the pultruded product, a signal is sent to the cutting motor 14221, the cutting motor 14221 stops working and sends a signal to the moving motor 14211. The moving motor 14211 drives the cutting frame 1422 to move away from the pultruded product in the vertical direction until the cutting frame 1422 returns to the initial position, waiting for next cutting.

At Step f2: the following mechanism 141 is returned to an initial position, waiting for next following.

When the cutting frame 1422 returns to the initial position, a signal is sent to the reset driving portion 144, and the reset cylinder 1441 drives the following mechanism 141 to move in the X-axis direction until the following mechanism 141 returns to the initial position, waiting for next following.

Further, when the pultrusion apparatus 100 includes the storage device 150, while the reset driving portion 144 drives the following mechanism 141 to be reset to wait for next cutting, the cut pultruded product is enabled to be withdrawn from the interior of the cutting device 140, which can avoid the impact on falling of the cut pultruded product into the storage device 150. When the cutting device 140 is further provided with a pushing plate 145, during the next cutting, the pushing plate 145 gradually approaches, abuts against, and pushes the previous cut pultruded product until the previous cut pultruded product completely falls into the storage mechanism 1513, which avoids that the previous cut section of the pultruded product cannot completely fall into the storage mechanism 1513 due to a limitation of a support post 1443.

The technical contents and technical features of the present application have been disclosed as above, but it can be understood that under the creative idea of the present invention, those skilled in the art may make various changes and improvements to the above structures and materials, including combinations of technical features herein separately disclosed or claimed, and obviously including other combinations of these features. Such variants and/or combinations are fallen within the technical field to which the invention relates and are fallen within the protection scope of the claims of the present invention.

## Claims

1. A pultrusion apparatus for manufacturing a pultruded product, comprising: successively in order in a pultrusion advancing direction, a forming device configured for curing yarns into the pultruded product; a traction device configured for providing a pultrusion traction force; and a cutting device configured for cutting the pultruded product;
wherein the forming device, the traction device, and the cutting device are horizontally arranged on a rack in a length direction of the rack;
the cutting device comprises a following mechanism which is arranged on the rack and movable in the length direction of the rack and a cutting mechanism which is mounted on the following mechanism and configured to cut the pultruded product, wherein the following mechanism comprises a base and a clamping mechanism arranged on the base, and the clamping mechanism is configured to clamp the pultruded product to cause the following mechanism to move synchronously along with the pultruded product.

2. The pultrusion apparatus according to claim 1, further comprising: a storage device, wherein the storage device is located at a next station relative to the cutting device in the pultrusion advancing direction, the storage device comprises at least two storage members, each storage member comprising a driving mechanism, a transferring mechanism, and a storage mechanism, wherein the transferring mechanism is located directly above the driving mechanism and comprises two transferring members elastically abutting against each other, the two transferring members facing each other in a width direction of the rack; the driving mechanism drives the pultruded product to pass through the transferring mechanism; and the storage mechanism is fixedly connected to a side of the transferring mechanism in the width direction of the rack.

3. The pultrusion apparatus according to claim 2, wherein upper surfaces of the two transferring members and a storage surface of the storage mechanism are located in a same plane, the plane being inclined downwardly towards the storage mechanism.

4. The pultrusion apparatus according to claim 2, wherein the transferring mechanism further comprises two fixing frames facing each other in the width direction of the rack; and the transferring member is located between the two fixing frames and connected to the fixing frames through springs.

5. The pultrusion apparatus according to claim 1, wherein the traction device comprises two clamping traction mechanisms capable of alternately advancing, each clamping traction mechanism comprising a sliding holding claw slidably connected to the rack and a movable holding claw movable in a vertical direction; and a hydraulic cylinder drives the movable holding claw to move, so as to cause the sliding holding claw and the movable holding claw to cooperate with each other to clamp the pultruded product.

6. The pultrusion apparatus according to claim 1, wherein the following mechanism is provided with two clamping mechanisms, the two clamping mechanisms being arranged on two sides of the cutting mechanism in the length direction of the rack, respectively.

7. The pultrusion apparatus according to claim 2, wherein the cutting device is further provided with a pushing plate, wherein the pushing plate pushes a cut pultruded product to fall into the storage mechanism along with a movement of the following mechanism.

8. The pultrusion apparatus according to claim 1, further comprising a measuring mechanism, the measuring mechanism comprising a sensor, wherein the sensor detects a pultruded product position signal and transmits the pultruded product position signal to the following mechanism, so as to control the following mechanism to clamp the pultruded product; and the following mechanism sends a signal to the cutting mechanism after the clamping is completed, so as to control the cutting mechanism to cut the pultruded product.

9. The pultrusion apparatus according to claim 2, wherein the rack is provided with at least two forming devices, at least two traction devices, at least two cutting devices, and at least two storage devices; and
the at least two forming devices are arranged in the width direction of the rack; the at least two traction devices are arranged in the width direction of the rack; the at least two cutting devices are arranged in the width direction of the rack; and the at least two storage devices are arranged in the width direction of the rack.

10. A pultrusion method, comprising:
step (1): impregnating a plurality of yarns with resin, then allowing the plurality of yarns to enter a forming device and be cured at a high temperature and formed into a pultruded product, and pulling, by a traction device, the pultruded product to move in a pultrusion advancing direction, such that the pultruded product is continuously formed;
step (2): detecting a pultruded product position signal and transmitting the pultruded product position signal to a cutting device, such that the cutting device cuts the pultruded product according to a preset length; and
step (3): driving the cutting device to be reset and wait for next cutting.

11. The pultrusion method according to claim 10, wherein the pultrusion apparatus comprises a measuring mechanism, the measuring mechanism comprising a sensor, wherein in the step (2), the pultruded product position signal is detected by the sensor; and the pultrusion method further comprises, before the step (2), step a1: moving the sensor to a position at a distance from the cutting device equal to the preset length.

12. The pultrusion method according to claim 10, wherein in the step (2), the cutting pultruded product specifically comprises:
step b1: clamping the pultruded product at the preset length thereof by the cutting device, so as to cause the cutting device to synchronously move along with the pultruded product; and
step b2: beginning cutting the pultruded product by the cutting device until the cutting is completed.

13. The pultrusion method according to claim 10, wherein the pultrusion apparatus further comprises a storage device, and the pultrusion method further comprises, after the step (2), step d1: allowing a cut pultruded product to fall into the storage device.

14. The pultrusion method according to claim 10, wherein the pultrusion apparatus further comprises a support mechanism, and the pultrusion method further comprises, after the step (2):
step e1: after the cutting is completed, continuously moving a following mechanism in the pultrusion advancing direction, so as to drive a clamping mechanism to clamp a cut pultruded product to move; and
step e2: after the following mechanism moves in place, allowing the clamping mechanism to release the cut pultruded product, such that the cut pultruded product is located on the support mechanism and waits to be discharged.

15. The pultrusion method according to claim 10, wherein in the step (3), the resetting of the cutting device specifically comprises:
step f1: restoring a cutting mechanism to an initial state to wait for next cutting; and
step f2: returning the following mechanism to an initial position to wait for next following.
